# EUROPEAN PATENT SPECIFICATION

(11) **EP 3 817 345 B1**
(45) Date of publication and mention of the grant of the patent: **06.12.2023**
(21) Application number: 19824923.7
(22) Date of filing: 20.06.2019
(51) Int. Cl.: H04M 1/02

(54) **TERMINAL**
ENDGERÄT
TERMINAL

(30) Priority: 27.06.2018 CN 201810678425
(43) Date of publication of application: 05.05.2021
(73) Proprietor: Vivo Mobile Communication Co., Ltd., Dongguan, Guangdong 523860 (CN)
(72) Inventor: LI, Yuzhong, Dongguan, Guangdong 523860 (CN)
(74) Representative: Conti, Marco
(86) International application number: PCT/CN2019/092035
(87) International publication number: WO 2020/001356

(56) References cited:
- EP-A1- 1 659 764
- CN-A- 102 710 823
- CN-A- 102 982 744
- CN-A- 106 537 281
- CN-A- 108 833 632
- US-A1- 2008 137 271
- US-A1- 2014 238 876
- US-A1- 2016 018 851
- US-A1- 2016 301 150

## Description

### CROSS-REFERENCE TO RELATED APPLICATION

### TECHNICAL FIELD

The present disclosure relates to the field of terminal technology, in particular to a terminal.

### BACKGROUND

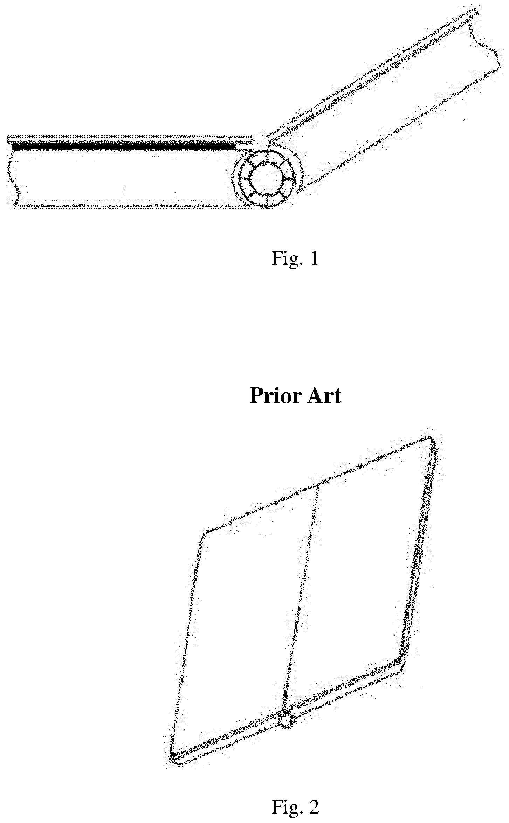

With development of technologies, in order to better meet user demands, foldable devices have emerged. Taking a mobile phone as an example, all the foldable device solutions in the related art provide a rotation shaft and hinge mechanism between two sub-parts to realize folding of a foldable screen, as shown in Fig. 1 and Fig. 2.

Document US2008/0137271A1 discusses a hand-held portable electronic device including a housing having a first housing section and a second housing section; electronic circuitry in the housing; and a Jacob's Ladder flipping hinge arrangement connecting the first and second housing sections to each other. Document EP1659764A1 discusses an information or communication technology device having at least 2 housing parts which are mechanically connected to one another via a system of bands in such a way that, by changing the spatial alignment of the housing parts different surfaces of the housing parts are accessible or visible from the outside relative to one another and depending on the respective current alignment, whereas other surfaces of the same housing parts cover one another. Reference is also made to prior art documents to US2016/018851 A1 and US2014/238876 A1.

However, since the foldable device design in the related art has the rotation shaft, there is a large gap at the joint and the gap is difficult to be made narrower, as a result, the foldable device has a crude appearance. Moreover, the foldable device occupies a large space, and an overall thickness thereof is difficult to reduce. The rotation shaft has a complex mechanism and is difficult to manufacture, leading to increased production cost. Further, the foldable device relies on the rotation shaft and the hinge to perform folding and flipping, and the folding and flipping can only be performed at the position of the rotation shaft, leading to a monotonous product operating mode.

### SUMMARY

An object of the present disclosure is to provide a terminal to solve problems of crude appearance, high production cost, large overall thickness, and monotonous folding and flipping mode of the foldable terminal in the related art.

The invention is as set out in claim 1, preferred forms being set out in the dependent claims 2 to 10.

In the embodiment of the present disclosure, by using the first flipping band and the second flipping band to join the first sub-part and the second sub-part, a split type shaftless foldable screen terminal that may be flipped and folded on both sides is realized. The folding and unfolding is realized by using a foldable device design enabling shaftless flipping and folding, thereby reducing manufacturing difficulty and saving production cost. A fit clearance in a flipped and folded state is reduced, which may improve fineness and delicacy of products. Moreover, there is no rotation shaft to occupy a thickness and width space, the overall thickness may be smaller. The terminal may also be folded and flipped on the left and right sides, thus the folding and flipping can be performed in a variety of modes, freely without constraint, and an exterior color of the product may be switched between two colors depending on a flipping and folding direction. Two screens (screens of two sub-parts) are joined together to form a large flat screen when the device is unfolded, and the two sub-parts are clamped tightly together when the device is fully folded, with the two screens being stacked in between and well protected from being broken or scratched. In addition, the two screens may be joined together to act as a large flat screen, or one of the two screens may be used alone. All the folded and flipped states present integral appearance effects, and there is no extra protruding shape. Thus, the problems of crude appearance, high production cost, large overall thickness, and monotonous folding and flipping mode of the foldable terminal in the related art are adequately solved.

### BRIEF DESCRIPTION OF THE DRAWINGS

Fig. 1 is a first schematic structural diagram of a foldable terminal in the related art;
Fig. 2 is a second schematic structural diagram of a foldable terminal in the related art;
Fig. 3 is a schematic structural diagram of a terminal according to an embodiment of the present disclosure;
Fig. 4 is a schematic structural diagram of a first flipping band or a second flipping band according to an embodiment of the present disclosure;
Fig. 5 is a schematic diagram of a terminal in a folded state according to an embodiment of the disclosure;
Fig. 6 is a schematic diagram of a terminal in an unfolded and opened state according to an embodiment of the disclosure;
Fig. 7 is a schematic diagram of a terminal when opened from a right side according to an embodiment of the disclosure;
Fig. 8 is a schematic diagram of a terminal when opened from a left side according to an embodiment of the disclosure;
Fig. 9 is a schematic diagram illustrating a left-to-right flipping process of a terminal according to an embodiment of the disclosure.

### DETAILED DESCRIPTION

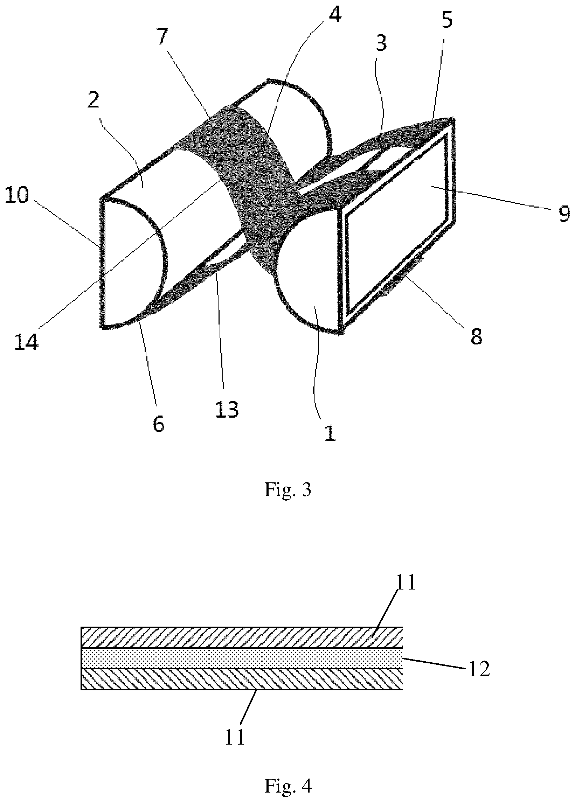

In view of the problems of crude appearance, high production cost, large overall thickness, and monotonous folding and flipping mode of a foldable terminal in the related art, a terminal is provided in the present disclosure. As shown in Fig. 3 to Fig. 9, the terminal includes a first sub-part 1, a second sub-part 2, at least two first flipping bands 3 and at least one second flipping band 4.

A first end 5 of each of the at least two first flipping bands 3 is attached to a first lengthwise side edge of a screen of the first sub-part 1, and a second end 6 of each of the at least two first flipping bands 3 is attached to a second lengthwise side edge of a screen of the second sub-part 2.

A first end 7 of each of the at least one second flipping band 4 is attached to a first lengthwise side edge of the screen of the second sub-part 2, and a second end 8 of each of the at least one second flipping band 4 is attached to a second lengthwise side edge of the screen of the first sub-part 1. The second flipping band 4 and the first flipping band 3 are alternately arranged.

When the terminal is in an unfolded state, the screen 9 of the first sub-part 1 and the screen 10 of the second sub-part 2 are coplanar, each of the at least two first flipping bands 3 fits snugly onto an outer surface of the first sub-part 1 or the second sub-part 2, and each of the at least one second flipping band 4 fits snugly onto an outer surface of the second sub-part 2 or the first sub-part 1.

The outer surface is a surface of the first sub-part 1 or the second sub-part 2 that is arranged opposite to a corresponding screen and connects a first lengthwise side edge and a second lengthwise side edge of the corresponding screen (the outer surface of the first sub-part is a surface of the first sub-part that is arranged opposite to the screen of the first sub-part and connects the first lengthwise side edge and the second lengthwise side edge of the screen of the first sub-part; the outer surface of the second sub-part is a surface of the second sub-part that is arranged opposite to the screen of the second sub-part and connects the first lengthwise side edge and the second lengthwise side edge of the screen of the second sub-part).

In the embodiment of the present disclosure, by using the first flipping band and the second flipping band to join the first sub-part and the second sub-part, a split type shaftless foldable screen terminal that may be flipped and folded on both sides is realized. The folding and unfolding is realized by using a foldable device design enabling shaftless flipping and folding, thereby reducing manufacturing difficulty and saving production cost. A fit clearance in a flipped and folded state is reduced, which may improve fineness and delicacy of products. Moreover, there is no rotation shaft to occupy a thickness and width space, the overall thickness may be smaller. The terminal may also be folded and flipped on the left and right sides, thus the folding and flipping can be performed in a variety of modes, freely without constraint, and an exterior color of the product may be switched between two colors depending on a flipping and folding direction. Two screens (screens of two sub-parts) are joined together to form a large flat screen when the device is unfolded, and the two sub-parts are clamped tightly together when the device is fully folded, with the two screens being stacked in between and well protected from being broken or scratched. In addition, the two screens may be joined together to act as a large flat screen, or one of the two screens may be used alone. All the folded and flipped states present integral appearance effects, and there is no extra protruding shape. Thus, the problems of crude appearance, high production cost, large overall thickness, and monotonous folding and flipping mode of the foldable terminal in the related art are adequately solved.

When the terminal is in a closed state, the screen of the first sub-part and the screen of the second sub-part are adjacently arranged in parallel, the first flipping band fits snugly onto the outer surface of the first sub-part or the second sub-part, and the second flipping band fits snugly onto the outer surface of the second sub-part or the first sub-part.

As shown in Fig. 3 and Fig. 4, each of the first flipping band 3 and the second flipping band 4 includes two reinforcing protective layers 11 and a flexible printed circuit layer 12 arranged between the two reinforcing protective layers 11, and the flexible printed circuit layer 12 includes a data line for transmitting data and a power line for transmitting electrical power.

Thus, it may be ensured that transmission of electric power and data is achieved while the flipping of the sub-parts is enabled.

As shown in Fig. 3, in embodiments of the present disclosure, a quantity of the first flipping bands 3 may be two, a quantity of the second flipping band 4 may be one, the second flipping band 4 is arranged between the two first flipping bands 3, and a distance from a center line of one of the two first flipping bands 3 to a center line of the second flipping band 4 is equal to a distance from a center line of the other one of the two first flipping bands 3 to the center line of the second flipping band 4.

In this way, it may be ensured that resources may be saved as much as possible (by using as few flipping bands as possible) while the flipping of the sub-parts is enabled, to ensure the smooth realization of sub-part flipping.

As shown in Fig. 3, a sum of widths of the first ends 5 of the first flipping bands 3 and a width of the first end 7 of the second flipping band 4 is equal to a length of the first lengthwise side edge of the screen 9 of the first sub-part 1, and the length of the first lengthwise side edge of the screen 9 of the first sub-part 1 is equal to a length of the first lengthwise side edge of the screen 10 of the second sub-part 2.

A sum of widths of the second ends 6 of the first flipping bands 3 and a width of the second end 8 of the second flipping band 4 is equal to a length of the second lengthwise side edge of the screen 9 of the first sub-part 1, and the length of the second lengthwise side edge of the screen 9 of the first sub-part 1 is equal to a length of the second lengthwise side edge of the screen 10 of the second sub-part 2.

In this way, strength of the flipping band may be ensured to a certain extent (by increasing the width of the flipping band as much as possible), so as to prolong a service life.

As shown in Fig. 3, the outer surfaces of the first sub-part 1 and the second sub-part 2 both are arc-shaped surfaces.

In this way, the flipping of the sub-parts and the snug fit between the flipping band and the sub-parts are facilitated, so as to ensure safe usage.

As shown in Fig. 3, a shape of the outer surface of the first sub-part 1 is consistent with a shape of the outer surface of the second sub-part 2, and a developed length of the outer surface of the first sub-part 1 is equal to a developed length of the outer surface of the second sub-part 2.

In this way, it is more convenient to design the flipping bands, that is, the identical flipping bands may be used.

As shown in Fig. 3, a length of a non-fixed portion 13 of the first flipping band 3 is equal to the developed length of the outer surface of the first sub-part 1 or the second sub-part 2. A length of a non-fixed portion 14 of the second flipping band 4 is equal to the developed length of the outer surface of the first sub-part 1 or the second sub-part 2. The non-fixed portion 13 of the first flipping band 3 refers to a freely movable portion other than the first end 5 attached to the first side edge of the first sub-part 1 and the second end 6 attached to the second side edge of the second sub-part 2. The non-fixed portion 14 of the second flipping band 4 refers to a freely movable portion other than the first end 7 attached to the first side edge of the second sub-part 1 and the second end 8 attached to the second side edge of the first sub-part 1.

In this way, sufficient flipping of the sub-parts may be ensured, to avoid that the sub-parts cannot be flipped into place due to an insufficient length of the flipping bands.

As shown in Fig. 3, the first end 5 of the first flipping band 3 is embedded between the screen 9 and the outer surface of the first sub-part 1, and is attached to the first lengthwise side edge of the screen of the first sub-part 1, and/or the second end 6 of the first flipping band 3 is embedded between the screen 10 and the outer surface of the second sub-part 2, and is attached to the second lengthwise side edge of the screen 10 of the second sub-part 2.

In this way, a connection strength of the first flipping band may be ensured, so as to prevent the first flipping band from being separated from the first sub-part or the second sub-part during usage due to an unreliable connection.

As shown in Fig. 3, the first end 7 of the second flipping band 4 is embedded between the screen 10 and the outer surface of the second sub-part 2, and is attached to the first lengthwise side edge of the screen of the second sub-part 2, and/or the second end 8 of the second flipping band 4 is embedded between the screen 9 and the outer surface of the first sub-part 1, and is attached to the second lengthwise side edge of the screen 9 of the first sub-part 1.

In this way, a connection strength of the second flipping band may be ensured, so as to prevent the second flipping band from being separated from the first sub-part or the second sub-part during usage due to an unreliable connection.

The terminal in the embodiment of the present disclosure will be further described below by taking a case in which there are two first flipping bands and one second flipping band, and the outer surfaces of the first sub-part and the second sub-part both are arc-shaped surfaces as an example.

In view of the above problems, a terminal is provided in the embodiment of the present disclosure, thereby a split type shaftless foldable screen electronic device design that may be flipped and folded on both sides is realized. The folding and unfolding is realized by using a foldable device design enabling shaftless flipping and folding, thereby reducing manufacturing difficulty and saving production cost. A fit clearance in a flipped and folded state is reduced, which may improve fineness and delicacy of products. Moreover, there is no rotation shaft to occupy a thickness and width space, the overall thickness may be smaller. The terminal may also be folded and flipped on the left and right sides, thus the folding and flipping can be performed in a variety of modes, freely without constraint, and an exterior color of the product may be switched between two colors depending on a flipping and folding direction. Two screens are joined together to form a large flat screen when the device is unfolded, and the two sub-parts are clamped tightly together when the device is fully folded, with the two screens being stacked in between and well protected from being broken or scratched. In addition, the two screens may be joined together to act as a large flat screen, or one of the two screens may be used alone. All the folded and flipped states present integral appearance effects, and there is no extra protruding shape.

Specifically, as shown in Fig. 3 to Fig. 9, the connection between the two sub-parts is accomplished by flipping bands (the first flipping bands 3 and the second flipping band 4) each composed of the flexible printed circuit (Flexible Printed Circuit, FPC) layer 12 and the reinforcing protective layers 11 arranged on front and back surfaces of the FPC layer. Two ends of the flipping bands are fixed to backside edges of housings of the two sub-parts: two ends of flipping bands on both sides are fixed to a side section of a lower edge of an upper housing and a side section of an upper edge of a lower housing respectively, and two ends of a middle flipping band are fixed to a middle section of an upper edge of the upper housing and a middle section of a lower edge of the lower housing respectively (the first ends 5 of the first flipping bands 3 are attached to the first lengthwise side edge of the screen of the first sub-part 1, and the second ends 6 of the first flipping bands 3 are attached to the second lengthwise side edge of the screen of the second sub-part 2; the first end 7 of the second flipping band 4 is attached to the first lengthwise side edge of the screen of the second sub-part 2, and the second end 8 of the second flipping band 4 is attached to the second lengthwise side edge of the screen of the first sub-part 1; the second flipping band 4 and the first flipping band 3 are alternately arranged), then the terminal may be flipped on both sides.

The lengths of the flipping bands are related to the developed lengths of exterior surfaces of the sub-parts. In a practical product, the sub-parts are tightly bonded and cannot be pulled apart. Fig. 3 is a schematic view illustrating a situation in which the sub-parts are pulled apart, and three such flipping bands are shown. The flipping bands fit snugly onto and follow the surfaces of respective sub-parts to roll and flip, to realize the open and close of the two screens. The shaftless flipping band is very thin and occupies a small width space. When the terminal is unfolded, a gap between two screens joined together is very small, thereby improving fineness and delicacy of the appearance significantly.

That is, the two sub-parts are attached with the flipping bands to form an integral foldable device. The flipping band has the FPC layer and the two reinforcing protective layers, where the FPC layer transmits data and electrical power to enable an interaction between the two sub-parts. Two ends of the flipping band may be fixed to different side edges of the first sub-part 1 and the second sub-part 2 respectively (as shown in Fig. 3).

The flipping bands may divide a width of a lengthwise edge of the sub-part into three equal portions (i.e., the width of the first flipping band is equal to the width of the second flipping band, and a sum of widths of three flipping bands is equal to the length of the side edge of the sub-part), but the present disclosure is not limited thereto.

In the embodiment of the present disclosure, both the first sub-part 1 and the second sub-part 2 may be freely flipped, and the flipping bands fit snugly onto the exterior surfaces of respective sub-parts when the sub-parts are flipped (the first flipping band 3 fits snugly onto the outer surface of the first sub-part 1 or the second sub-part 2, the second flipping band 4 fits snugly onto the outer surface of the second sub-part 2 or the first sub-part 1), and movement trajectories of the exterior surfaces of the two sub-parts follow contours of the exterior surfaces of the sub-parts. The contour is not limited to circular.

When the two sub-parts are flipped, the exterior surfaces of the sub-parts and the flipping bands fit together closely and move synchronously. Since the flipping bands are separately fixed at two ends to an inner edge of one sub-part and an outer edge of the other sub-part (the first ends 5 of the first flipping bands 3 are attached to the first lengthwise side edge of the screen of the first sub-part 1, and the second ends 6 of the first flipping bands 3 are attached to the second lengthwise side edge of the screen of the second sub-part 2; the first end 7 of the second flipping band 4 is attached to the first lengthwise side edge of the screen of the second sub-part 2, and the second end 8 of the second flipping band 4 is attached to the second lengthwise side edge of the screen of the first sub-part 1; the second flipping band 4 and the first flipping band 3 are alternately arranged), during movement, the two outer side flipping bands (the first flipping bands 3) and the one middle flipping band (the second flipping band 4) move in opposite directions and fit snugly onto the exterior surfaces of the two sub-parts, to hold the two sub-parts without being scattered.

In the embodiments of the present disclosure, the flipping bands have the functions of transmitting data and electrical power between the two sub-parts, binding the sub-parts, and flipping the sub-parts. Moreover, the first flipping band and the second flipping band may have different colors, to achieve two sets of exterior colors for a single device.

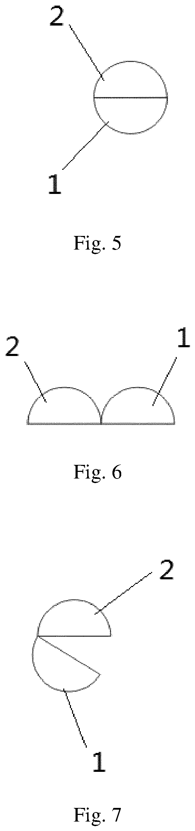

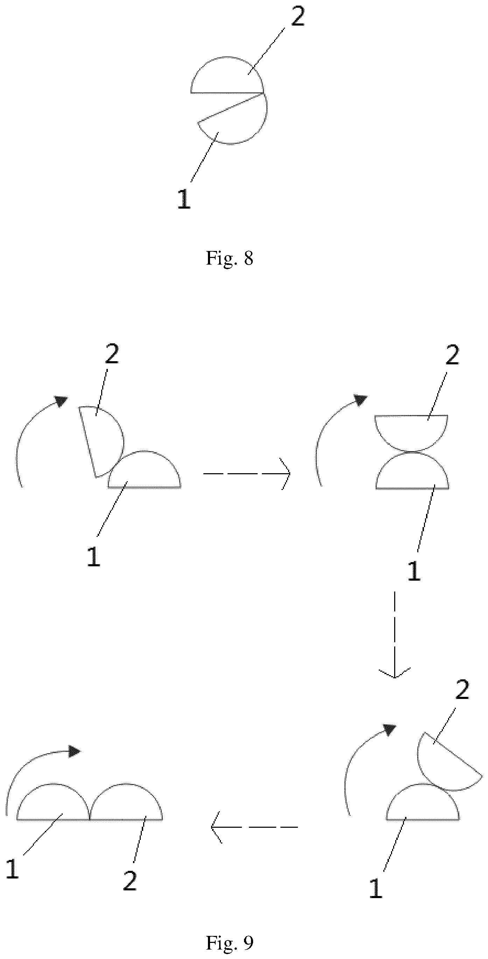

The lengths of the flipping bands are related to the developed lengths of the exterior surfaces of the sub-parts. Due to reverse binding of the flipping bands, a terminal in the folded state may be opened on both the left side and the right side (as shown in Fig. 7 and Fig. 8), and will not be constrained.

## Claims

1. A terminal, comprising:
a first sub-part (1), a second sub-part (2), at least two first flipping bands (3) and at least one second flipping band (4);
wherein a first end (5) of each of the at least two first flipping bands (3) is attached to a first lengthwise side edge of a screen (9) of the first sub-part (1), and a second end (6) of each of the at least two first flipping bands (4) is attached to a second lengthwise side edge of a screen (10) of the second sub-part (2);
a first end (7) of each of the at least one second flipping band (4) is attached to a first lengthwise side edge of the screen (10) of the second sub-part (2), and a second end (8) of each of the at least one second flipping band (4) is attached to a second lengthwise side edge of the screen (9) of the first sub-part (1); the at least one second flipping band (4) and the at least two first flipping bands (3) are alternately arranged;
when the terminal is in an unfolded state, the screen (9) of the first sub-part (1) and the screen (10) of the second sub-part (2) are coplanar, each of the at least two first flipping bands (3) fits snugly onto an outer surface of the first sub-part (1) , and each of the at least one second flipping band (4) fits snugly onto the outer surface of the second sub-part (2);
wherein the outer surface is a surface of the first sub-part (1) or the second sub-part (2) that is arranged opposite to the screen (9) of the first sub-part (1) or the screen (10) of the second sub-part (2) and connects a first lengthwise side edge and a second lengthwise side edge of the screen of the first sub-part (1) or the screen of the second sub-part (2;
when the terminal is in a closed state, the screen (9) of the first sub-part (1) and the screen (10) of the second sub-part (2) are adjacently arranged in parallel, each of the at least two first flipping bands (3) fits snugly onto an outer surface of the first sub-part (1), and each of the at least one second flipping band (4) fits snugly onto the outer surface of the second sub-part (2);
**characterized in that**,
the first lengthwise side edge of a screen of the first sub-part (1) is separated from the first lengthwise side edge of a screen of the second sub-part (2), to enable the terminal to switch from the closed state to the unfolded state;
the second lengthwise side edge of a screen of the first sub-part (1) is separated from the second lengthwise side edge of a screen of the second sub-part (2), to enable the terminal to switch from the closed state to the unfolded state.

2. The terminal according to claim 1, wherein each of the at least two first flipping bands (3) and the at least one second flipping band (4) comprises two reinforcing protective layers (11) and a flexible printed circuit layer (12) arranged between the two reinforcing protective layers (11).

3. The terminal according to claim 1, wherein a quantity of the at least two first flipping bands (3) is two, a quantity of the at least one second flipping band (4) is one, the second flipping band (4) is arranged between the two first flipping bands (3), and a distance from a center line of one of the two first flipping bands (3) to a center line of the second flipping band (4) is equal to a distance from a center line of the other one of the two first flipping bands (3) to the center line of the second flipping band (4).

4. The terminal according to claim 1 or 3, wherein a sum of widths of the first ends (5) of the at least two first flipping bands (3) and a width of the first end (6) of the at least one second flipping band (4) is equal to a length of the first lengthwise side edge of the screen of the first sub-part (1); and the length of the first lengthwise side edge of the screen of the first sub-part is (1) equal to a length of the first lengthwise side edge of the screen of the second sub-part (2);
a sum of widths of the seconds end (6) of the at least two first flipping bands (3) and a width of the second end (8) of the at least one second flipping band (4) is equal to a length of the second lengthwise side edge of the screen of the first sub-part (1); and the length of the second lengthwise side edge of the screen of the first sub-part (1) is equal to a length of the second lengthwise side edge of the screen of the second sub-part (2).

5. The terminal according to claim 1, wherein the outer surfaces of the first sub-part (1) and the second sub-part (2) both are arc-shaped surfaces.

6. The terminal according to claim 1, wherein a shape of the outer surface of the first sub-part (1) is same with a shape of the outer surface of the second sub-part (2), and a developed length of the outer surface of the first sub-part (1) is equal to a developed length of the outer surface of the second sub-part (2).

7. The terminal according to claim 6, wherein a length of a non-fixed portion (13) of each of the at least two first flipping bands (3) is equal to the developed length of the outer surface of the first sub-part (1) or the second sub-part (2); and
a length of a non-fixed portion (14) of each of the at least one second flipping band (4) is equal to the developed length of the outer surface of the first sub-part (1) or the second sub-part (2);
wherein, the non-fixed portion (13) of each of the at least two first flipping bands (3) refers to a freely movable portion other than the first end (5) attached to the first side edge of the first sub-part (1) and the second end (6) attached to the second side edge of the second sub-part (2);
the non-fixed portion (14) of each of the at least one second flipping band (4) refers to a freely movable portion other than the first end (7) attached to the first side edge of the second sub-part (2) and the second end (8) attached to the second side edge of the first sub-part (1).

8. The terminal according to claim 1, wherein the first end (5) of each of the at least two first flipping bands (3) is embedded between the screen (9) and the outer surface of the first sub-part (1), and is attached to the first lengthwise side edge of the screen (9) of the first sub-part (1); and/or
the second end (6) of each of the at least two first flipping bands (4) is embedded between the screen (10) and the outer surface of the second sub-part (2), and is attached to the second lengthwise side edge of the screen (10) of the second sub-part (2).

9. The terminal according to claim 1, wherein the first end (7) of each of the at least one second flipping band (4) is embedded between the screen (10) and the outer surface of the second sub-part (2), and is attached to the first lengthwise side edge of the screen (10) of the second sub-part (2); and/or
the second end (8) of each of the at least one second flipping band (4) is embedded between the screen (9) and the outer surface of the first sub-part (1), and is attached to the second lengthwise side edge of the screen (9) of the first sub-part (1).

10. The terminal according to claim 2, wherein the flexible printed circuit layer (12) comprises a data line for transmitting data and a power line for transmitting electrical power.

## Patentansprüche

1. Endgerät, umfassend:
einen ersten Unterteil (1), einen zweiten Unterteil (2), mindestens zwei erste Umdrehbänder (3) und mindestens ein zweites Umdrehband (4);
wobei ein erstes Ende (5) eines jeden der mindestens zwei ersten Umdrehbänder (3) an einer ersten Längsseitenkante eines Bildschirms (9) des ersten Unterteils (1) angebracht ist und ein zweites Ende (6) eines jeden der mindestens zwei ersten Umdrehbänder (4) an einer zweiten Längsseitenkante eines Bildschirms (10) des zweiten Unterteils (2) angebracht ist;
ein erstes Ende (7) eines jeden des mindestens einen zweiten Umdrehbands (4) ist an einer ersten Längsseitenkante des Bildschirms (10) des zweiten Unterteils (2) angebracht und ein zweites Ende (8) eines jeden des mindestens einen zweiten Umdrehbands (4) ist an einer zweiten Längsseitenkante des Bildschirms (9) des ersten Unterteils (1) angebracht; das mindestens eine zweite Umdrehband (4) und die mindestens zwei ersten Umdrehbänder (3) sind alternierend angeordnet;
wenn sich das Endgerät in einem aufgeklappten Zustand befindet, sind der Bildschirm (9) des ersten Unterteils (1) und der Bildschirm (10) des zweiten Unterteils (2) koplanar, wobei eines jeden der mindestens zwei ersten Umdrehbänder (3) eng an einer Außenfläche des ersten Unterteils (1) anliegt und eines jeden des mindestens einen zweiten Umdrehbands (4) eng an der Außenfläche des zweiten Unterteils (2) anliegt;
wobei die Außenfläche eine Fläche des ersten Unterteils (1) oder des zweiten Unterteils (2) ist, die gegenüber dem Bildschirm (9) des ersten Unterteils (1) oder dem Bildschirm (10) des zweiten Unterteils (2) angeordnet ist und eine erste Längsseitenkante und eine zweite Längsseitenkante des Bildschirms des ersten Unterteils (1) oder des Bildschirms des zweiten Unterteils (2) verbindet;
wenn sich das Endgerät in einem geschlossenen Zustand befindet, sind der Bildschirm (9) des ersten Unterteils (1) und der Bildschirm (10) des zweiten Unterteils (2) nebeneinander parallel angeordnet, wobei eines jeden der mindestens zwei ersten Umdrehbänder (3) eng an einer Außenfläche des ersten Unterteils (1) anliegt und eines jeden des mindestens einen zweiten Umdrehbands (4) eng an der Außenfläche des zweiten Unterteils (2) anliegt;
**dadurch gekennzeichnet, dass** die erste Längsseitenkante eines Bildschirms des ersten Unterteils (1) von der ersten Längsseitenkante eines Bildschirms des zweiten Unterteils (2) getrennt ist, um es dem Endgerät zu ermöglichen, vom geschlossenen Zustand in den aufgeklappten Zustand zu wechseln;
die zweite Längsseitenkante eines Bildschirms des ersten Unterteils (1) ist von der zweiten Längsseitenkante eines Bildschirms des zweiten Unterteils (2) getrennt, um es dem Endgerät zu ermöglichen, vom geschlossenen Zustand in den aufgeklappten Zustand zu wechseln.

2. Endgerät nach Anspruch 1, wobei eines jeden der mindestens zwei ersten Umdrehbänder (3) und des mindestens einen zweiten Umdrehbands (4) zwei Verstärkungsschutzschichten (11) und eine flexible Leiterplattenschicht (12) umfasst, die zwischen den zwei Verstärkungsschutzschichten (11) angeordnet ist.

3. Endgerät nach Anspruch 1, wobei eine Menge der mindestens zwei ersten Umdrehbänder (3) zwei beträgt, eine Menge des mindestens einen zweiten Umdrehbands (4) eins beträgt, das zweite Umdrehband (4) zwischen den zwei ersten Umdrehbändern (3) angeordnet ist und ein Abstand von einer Mittellinie eines der zwei ersten Umdrehbänder (3) zu einer Mittellinie des zweiten Umdrehbands (4) gleich einem Abstand von einer Mittellinie des anderen der zwei ersten Umdrehbänder (3) zu der Mittellinie des zweiten Umdrehbands (4) ist.

4. Endgerät nach Anspruch 1 oder 3, wobei eine Summe von Breiten der ersten Enden (5) der mindestens zwei ersten Umdrehbänder (3) und einer Breite des ersten Endes (6) des mindestens einen zweiten Umdrehbands (4) gleich einer Länge der ersten Längsseitenkante des Bildschirms des ersten Unterteils (1) ist; und die Länge der ersten Längsseitenkante des Bildschirms des ersten Unterteils (1) ist gleich einer Länge der ersten Längsseitenkante des Bildschirms des zweiten Unterteils (2) ;
eine Summe von Breiten des zweiten Endes (6) der mindestens zwei ersten Umdrehbänder (3) und einer Breite des zweiten Endes (8) des mindestens einen zweiten Umdrehbands (4) ist gleich einer Länge der zweiten Längsseitenkante des Bildschirms des ersten Unterteils (1); und die Länge der zweiten Längsseitenkante des Bildschirms des ersten Unterteils (1) ist gleich einer Länge der zweiten Längsseitenkante des Bildschirms des zweiten Unterteils (2).

5. Endgerät nach Anspruch 1, wobei die Außenflächen des ersten Unterteils (1) und des zweiten Unterteils (2) beide bogenförmige Flächen sind.

6. Endgerät nach Anspruch 1, wobei eine Form der Außenfläche des ersten Unterteils (1) mit einer Form der Außenfläche des zweiten Unterteils (2) übereinstimmt und eine entwickelte Länge der Außenfläche des ersten Unterteils (1) gleich einer entwickelten Länge der Außenfläche des zweiten Unterteils (2) ist.

7. Endgerät nach Anspruch 6, wobei eine Länge eines nicht fixierten Abschnitts (13) eines jeden der mindestens zwei ersten Umdrehbänder (3) gleich der entwickelten Länge der Außenfläche des ersten Unterteils (1) oder des zweiten Unterteils (2) ist; und eine Länge eines nicht fixierten Abschnitts (14) eines jeden des mindestens einen zweiten Umdrehbands (4) ist gleich der entwickelten Länge der Außenfläche des ersten Unterteils (1) oder des zweiten Unterteils (2); wobei sich der nicht fixierte Abschnitt (13) eines jeden der mindestens zwei ersten Umdrehbänder (3) auf einen frei beweglichen Abschnitt bezieht, der von dem ersten Ende (5), das an der ersten Seitenkante des ersten Unterteils (1) angebracht ist, und dem zweiten Ende (6), das an der zweiten Seitenkante des zweiten Unterteils (2) angebracht ist, verschieden ist;
der nicht fixierte Abschnitt (14) eines jeden des mindestens einen zweiten Umdrehbands (4) bezieht sich auf einen frei beweglichen Abschnitt, der von dem ersten Ende (7), das an der ersten Seitenkante des zweiten Unterteils (2) angebracht ist, und dem zweiten Ende (8), das an der zweiten Seitenkante des ersten Unterteils (1) angebracht ist, verschieden ist.

8. Endgerät nach Anspruch 1, wobei das erste Ende (5) eines jeden der mindestens zwei ersten Umdrehbänder (3) zwischen dem Bildschirm (9) und der Außenfläche des ersten Unterteils (1) eingebettet ist und an der ersten Längsseitenkante des Bildschirms (9) des ersten Unterteils (1) angebracht ist; und/oder das zweite Ende (6) eines jeden der mindestens zwei ersten Umdrehbänder (4) ist zwischen dem Bildschirm (10) und der Außenfläche des zweiten Unterteils (2) eingebettet und ist an der zweiten Längsseitenkante des Bildschirms (10) des zweiten Unterteils (2) angebracht.

9. Endgerät nach Anspruch 1, wobei das erste Ende (7) eines jeden des mindestens einen zweiten Umdrehbands (4) zwischen dem Bildschirm (10) und der Außenfläche des zweiten Unterteils (2) eingebettet ist und an der ersten Längsseitenkante des Bildschirms (10) des zweiten Unterteils (2) angebracht ist; und/oder das zweite Ende (8) eines jeden des mindestens einen zweiten Umdrehbands (4) ist zwischen dem Bildschirm (9) und der Außenfläche des ersten Unterteils (1) eingebettet und ist an der zweiten Längsseitenkante des Bildschirms (9) des ersten Unterteils (1) angebracht.

10. Endgerät nach Anspruch 2, wobei die flexible Leiterplattenschicht (12) eine Datenleitung zum Übertragen von Daten und eine Stromleitung zum Übertragen von elektrischer Leistung umfasst.

## Revendications

1. Terminal, comprenant :
une première sous-partie (1), une deuxième sous-partie (2), au moins deux premières bandes de basculement (3) et au moins une deuxième bande de basculement (4) ;
dans lequel une première extrémité (5) de chacune des au moins deux premières bandes de basculement (3) est fixée à un premier bord latéral longitudinal d'un écran (9) de la première sous-partie (1), et une deuxième extrémité (6) de chacune des au moins deux premières bandes de basculement (4) est fixée à un deuxième bord latéral longitudinal d'un écran (10) de la deuxième sous-partie (2) ;
une première extrémité (7) de chacune de l'au moins une deuxième bande de basculement (4) est fixée à un premier bord latéral longitudinal de l'écran (10) de la deuxième sous-partie (2), et une deuxième extrémité (8) de chacune de l'au moins une deuxième bande de basculement (4) est fixée à un deuxième bord latéral longitudinal de l'écran (9) de la première sous-partie (1) ; l'au moins une deuxième bande de basculement (4) et les au moins deux premières bandes de basculement (3) sont disposées de manière alternée ;
lorsque le terminal se trouve dans un état déplié, l'écran (9) de la première sous-partie (1) et l'écran (10) de la deuxième sous-partie (2) sont coplanaires, chacune des au moins deux premières bandes de basculement (3) s'adapte parfaitement sur une surface extérieure de la première sous-partie (1), et chacune de l'au moins une deuxième bande de basculement (4) s'adapte parfaitement sur la surface extérieure de la deuxième sous-partie (2) ;
dans lequel la surface extérieure est une surface de la première sous-partie (1) ou de la deuxième sous-partie (2) qui est disposée à l'opposé de l'écran (9) de la première sous-partie (1) ou de l'écran (10) de la deuxième sous-partie (2) et qui relie un premier bord latéral longitudinal et un deuxième bord latéral longitudinal de l'écran de la première sous-partie (1) ou de l'écran de la deuxième sous-partie (2) ;
lorsque le terminal se trouve dans un état fermé, l'écran (9) de la première sous-partie (1) et l'écran (10) de la deuxième sous-partie (2) sont disposés de façon adjacente en parallèle, chacune des au moins deux premières bandes de basculement (3) s'adapte parfaitement sur une surface extérieure de la première sous-partie (1), et chacune de l'au moins une deuxième bande de basculement (4) s'adapte parfaitement sur la surface extérieure de la deuxième sous-partie (2) ;
**caractérisé en ce que** le premier bord latéral longitudinal d'un écran de la première sous-partie (1) est séparé du premier bord latéral longitudinal d'un écran de la deuxième sous-partie (2), pour permettre au terminal de passer de l'état fermé à l'état déplié ;
le deuxième bord latéral longitudinal d'un écran de la première sous-partie (1) est séparé du deuxième bord latéral longitudinal d'un écran de la deuxième sous-partie (2), afin de permettre au terminal de passer de l'état fermé à l'état déplié.

2. Terminal selon la revendication 1, dans lequel chacune des au moins deux premières bandes de basculement (3) et l'au moins une deuxième bande de basculement (4) comprennent deux couches protectrices de renforcement (11) et une couche de circuit imprimé souple (12) disposée entre les deux couches protectrices de renforcement (11).

3. Terminal selon la revendication 1, dans lequel une quantité des au moins deux premières bandes de basculement (3) est de deux, une quantité de l'au moins une deuxième bande de basculement (4) est de une, la deuxième bande de basculement (4) est disposée entre les deux premières bandes de basculement (3), et une distance d'une ligne médiane de l'une des deux premières bandes de basculement (3) à une ligne médiane de la deuxième bande de basculement (4) est égale à une distance d'une ligne médiane de l'autre des deux premières bandes de basculement (3) à la ligne médiane de la deuxième bande de basculement (4).

4. Terminal selon la revendication 1 ou 3, dans lequel une somme des largeurs des premières extrémités (5) des au moins deux premières bandes de basculement (3) et une largeur de la première extrémité (6) de l'au moins une deuxième bande de basculement (4) est égale à une longueur du premier bord latéral longitudinal de l'écran de la première sous-partie (1) ; et la longueur du premier bord latéral longitudinal de l'écran de la première sous-partie (1) est égale à une longueur du premier bord latéral longitudinal de l'écran de la deuxième sous-partie (2) ;
une somme des largeurs des deuxièmes extrémités (6) des au moins deux premières bandes de basculement (3) et une largeur de la deuxième extrémité (8) de l'au moins une deuxième bande de basculement (4) est égale à une longueur du deuxième bord latéral longitudinal de l'écran de la première sous-partie (1) ; et la longueur du deuxième bord latéral longitudinal de l'écran de la première sous-partie (1) est égale à une longueur du deuxième bord latéral longitudinal de l'écran de la deuxième sous-partie (2).

5. Terminal selon la revendication 1, dans lequel les surfaces extérieures de la première sous-partie (1) et de la deuxième sous-partie (2) sont toutes deux des surfaces en forme d'arc.

6. Terminal selon la revendication 1, dans lequel une forme de la surface extérieure de la première sous-partie (1) est identique à une forme de la surface extérieure de la deuxième sous-partie (2), et une longueur développée de la surface extérieure de la première sous-partie (1) est égale à une longueur développée de la surface extérieure de la deuxième sous-partie (2) .

7. Terminal selon la revendication 6, dans lequel une longueur d'une partie non fixe (13) de chacune des au moins deux premières bandes de basculement (3) est égale à la longueur développée de la surface extérieure de la première sous-partie (1) ou de la deuxième sous-partie (2) ; et
une longueur d'une partie non fixe (14) de chacune de l'au moins une deuxième bande de basculement (4) est égale à la longueur développée de la surface extérieure de la première sous-partie (1) ou de la deuxième sous-partie (2) ;
dans lequel, la partie non fixe (13) de chacune des au moins deux premières bandes de basculement (3) se réfère à une partie librement mobile autre que la première extrémité (5) fixée au premier bord latéral de la première sous-partie (1) et la deuxième extrémité (6) fixée au deuxième bord latéral de la deuxième sous-partie (2) ;
la partie non fixe (14) de chacune de l'au moins une deuxième bande de basculement (4) se réfère à une partie librement mobile autre que la première extrémité (7) fixée au premier bord latéral de la deuxième sous-partie (2) et la deuxième extrémité (8) fixée au deuxième bord latéral de la première sous-partie (1).

8. Terminal selon la revendication 1, dans lequel la première extrémité (5) de chacune des au moins deux premières bandes de basculement (3) est intégrée entre l'écran (9) et la surface extérieure de la première sous-partie (1), et est fixée au premier bord latéral longitudinal de l'écran (9) de la première sous-partie (1) ; et/ou la deuxième extrémité (6) de chacune des au moins deux premières bandes de basculement (4) est intégrée entre l'écran (10) et la surface extérieure de la deuxième sous-partie (2), et est fixée au deuxième bord latéral longitudinal de l'écran (10) de la deuxième sous-partie (2).

9. Terminal selon la revendication 1, dans lequel la première extrémité (7) de chacune de l'au moins une deuxième bande de basculement (4) est intégrée entre l'écran (10) et la surface extérieure de la deuxième sous-partie (2), et est fixée au premier bord latéral longitudinal de l'écran (10) de la deuxième sous-partie (2) ; et/ou la deuxième extrémité (8) de chacune de l'au moins une deuxième bande de basculement (4) est intégrée entre l'écran (9) et la surface extérieure de la première sous-partie (1), et est fixée au deuxième bord latéral longitudinal de l'écran (9) de la première sous-partie (1).

10. Terminal selon la revendication 2, dans lequel la couche de circuit imprimé souple (12) comprend une ligne de données pour transmettre des données et une ligne d'alimentation pour transmettre de l'énergie électrique.
